# EUROPEAN PATENT APPLICATION

(11) **EP 2 897 371 A2**
(43) Date of publication of application: **22.07.2015**
(21) Application number: 13794140.7
(22) Date of filing: 24.07.2013
(51) Int. Cl.: H04N 21/434

(54) **SUBTITLE EXTRACTION METHOD AND APPARATUS**

(30) Priority: 13.09.2012 CN 201210337799
(71) Applicant: ZTE Corporation, Shenzhen, Guangdong 518057 (CN)
(72) Inventor: ZHAO, Ming, Shenzhen Guangdong 518057 (CN)
(74) Representative: Mozzi, Matteo
(86) International application number: PCT/CN2013/080032
(87) International publication number: WO 2013/174337

(57) **Abstract**

Disclosed are a method and device for extracting subtitles. The method comprises: a video stream input into a mobile terminal is separated into video data and subtitle data through a hardware decoding mode; and the video data and the subtitle data are sent. By means of the present invention, the problem of relatively high resource occupation rate and low processing efficiency existed in a method for extracting subtitles in the relevant art is solved, thereby increasing the processing speed of a mobile terminal and improving the user experience.

## Description

### Technical Field

The present invention relates to the field of communication, in particular to a method and device for extracting subtitles.

### Background

At present, with the rapid development of communication networks (such as the third generation mobile communications (3G) network), users put forward higher requirements to the traditional voice service of the mobile network and pay more and more attention to the multi-media function of the mobile terminal. In a top intelligent mobile terminal, the support to the display of flow media of various formats has been a standard configuration to this type of terminal, in the process of video display, the extraction for the subtitle in the video also naturally becomes the requirement of the user.

However, the realization of the function of extracting the subtitles in the video is mostly based on the realization of the pure software algorithm of digital image processing, the video frame image is subjected to static analysis so as to extract the subtitle. This method has the following defects:
1, the realization of the pure software algorithm has a large amount of calculations, it is unable to dynamically extract the subtitle in real time, at present, only a subtitle of a short video with relatively low picture quality can be extracted, and it basically has no ability to extract the subtitle of a high-definition video.
2, by means of the realization of the pure software algorithm, the fluency of the operation of a main processor of a mobile terminal can be greatly affected, since the operation of the algorithm consumes processor resources very much, in the process of subtitle extraction, a user may feel that the terminal operates slowly, thereby greatly affecting the user experience.

For the problem of relatively high resource occupation rate and low processing efficiency of a subtitle extraction method in a relevant technology, no effective solution has been presented.

### Summary

In order to solve the problem of relatively high resource occupation rate and low processing efficiency existed in a method for extracting subtitles in the relevant art, embodiments of the present invention provides a method and device for extracting subtitles to at least solve the above-mentioned problem.

According to one aspect of the invention, provided is a method for extracting subtitles which comprises separating a video stream input into a mobile terminal into video data and subtitle data through a hardware decoding mode; and sending the video data and the subtitle data.

Preferably, separating the video stream input into the video data and the subtitle data through the hardware decoding mode comprises sending the video stream input to a video processing chip, wherein the video processing chip is configured to separate the input video stream into the video data and the subtitle data through a hardware decoding mode and output the video data and the subtitle data which are separated via a physical interface.

Preferably, the physical interface comprises at least one of the following: a Secure Digital Input/Output (SDIO) interface, a Universal Serial Bus (USB) interface, a dual port Random Access Memory (RAM) and a shared memory.

Preferably, before sending the video data and the subtitle data, the method further comprises optimizing the video data and the subtitle data respectively.

Preferably, optimizing the video data comprises at least one of the following: rending image, enhancing resolution, and adjusting a frame rate for playing video.

Preferably, optimizing the subtitle data comprises at least one of the following: saving the subtitles, restoring text and converting format.

Preferably, after sending the video data and the subtitle data, the method further comprises displaying the video data and the subtitle data according to a control instruction of the user.

According to another aspect of the present invention, also provided is a device for extracting subtitles which comprises a separation component configured to separate a video stream input into a mobile terminal into video data and subtitle data through a hardware decoding mode and a sending component configured to send the video data and the subtitle data.

Preferably, the separation component comprises a sending unit configured to send the input video stream to a video processing chip, wherein the video processing chip is configured to separate the input video stream into the video data and the subtitle data through a hardware decoding mode; and an output unit configured to output the video data and the subtitle data which are separated via a physical interface.

Preferably, the device further comprises an optimization component configured to optimize the video data and the subtitle data respectively.

In the embodiments of the present invention, a video stream input into a mobile terminal is separated into video data and subtitle data through a hardware decoding mode, and the video data and the subtitle data are sent. The above solution solves the problem of relatively high resource occupation rate and low processing efficiency in the relevant art, thereby increasing the processing speed of a mobile terminal and improving the user experience.

### Brief Description of the Drawings

Drawings, provided for further understanding of the invention and forming a part of the specification, are used to explain the invention together with embodiments of the invention rather than to limit the invention. In the drawings:
Fig. 1 is a flowchart of a method for extracting subtitles according to an embodiment of the present invention;
Fig. 2 is a structural block diagram of a device for extracting subtitles according to an embodiment of the present invention;
Fig. 3 is a preferred structural block diagram of a separation component according to an embodiment of the present invention;
Fig. 4 is a prefered structural block diagram of a device for extracting subtitles according to an embodiment of the present invention;
Fig. 5 is a cooperation schematic diagram of all the function components of a mobile terminal according to second preferred embodiment of the present invention; and
Fig. 6 is a flowchart of an operating mode for extracting subtitles of a video playing on a mobile terminal according to a second preferred embodiment of the present invention.

### Detailed Description of the Embodiments

The embodiment of the present invention is described below with reference to the accompanying drawings and embodiments in detail. Note that, the embodiments of the invention and the features of the embodiments can be combined with each other if there is no conflict.

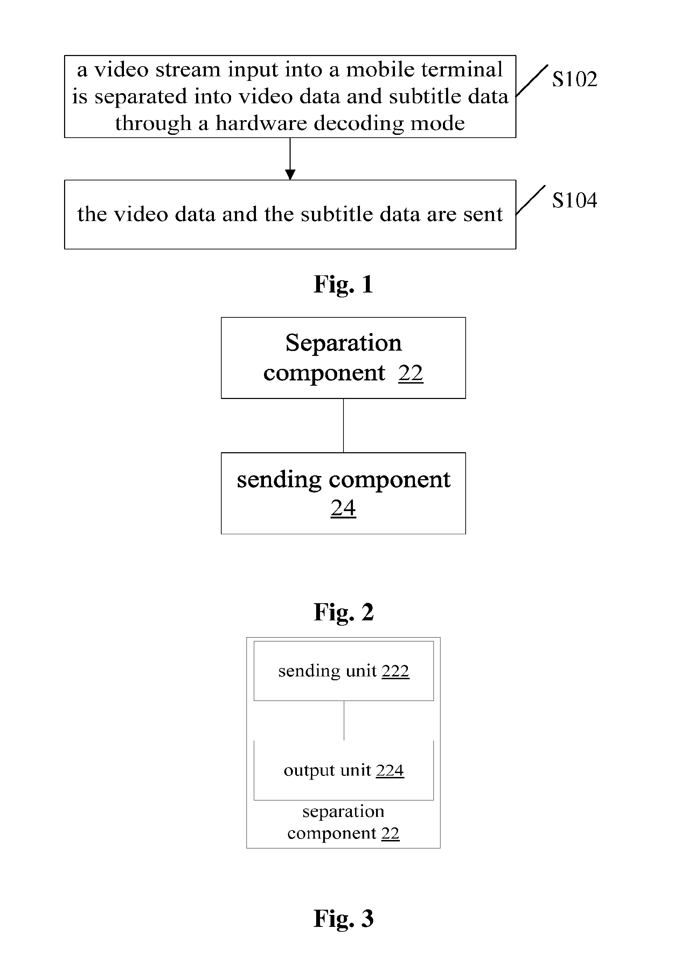

A method for extracting subtitles is provided in an embodiment of the present invention. Fig. 1 is a flowchart of a method for extracting subtitles according to an embodiment of the present invention, as shown in Fig. 1, the method comprises the following steps:
step S102, a video stream input into a mobile terminal is separated into video data and subtitle data through a hardware decoding mode; and
step S104, the video data and the subtitle data are sent.

Through the above-mentioned steps, a video stream input into a mobile terminal is separated into video data and subtitle data through a hardware decoding mode and then the video data and the subtitle data are sent respectively in the present embodiment. Compared to the manner of using a pure software algorithm based on digital image processing to realize the separation of video data and subtitle data in the relevant art. The hardware decoding mode is used in the present embodiment so that the efficiency is high and it has no requirements to the image quality of the video. No matter the video has low image quality or high image quality, the separation of the video data and the subtitle data may be achieved. Furthermore, the hardware decoding mode has a small amount of calculation, so that the load of the main processor in the process of separating the video data and the subtitle data is reduced, and the problem of relatively high resource occupation rate and low processing efficiency existed in a method for extracting subtitles in the relevant art is solved, thereby increasing the processing speed of a mobile terminal and improving the user experience.

As a preferred implementation, the separation through the hardware decoding mode in step S102 may be achieved by an independent video processing chip, and the video processing chip mainly completes the separation of the video stream, which comprises an independent Digital Signal Processor (DSP) belonging to a hard decoding type image processor. The video processing chip may be configured to separate the input video stream into video data and subtitle data through a hardware decoding mode and output the video data and the subtitle data which are separated via a physical interface.

Preferably, the above-mentioned independent video processing chip may be connected to a main CPU and other processing units via a physical interface. The physical interface may comprise at least one of the following types: a Secure Digital Input/Output (SDIO) interface, a Universal Serial Bus (USB) interface, a dual port Random Access Memory (RAM), a shared memory, etc.

By means of this mode, since the independent video processing chip is applied to separate the video data and the subtitle data through the hardware decoding mode, there is no need to occupy the computing resource of the main processor, and the operations of other procedures in the mobile terminal will not be affected in the process of the separation of the video and the subtitle. Therefore, a user will not feel that the operation of the terminal becomes slow, thereby improving the user experience.

As a preferred implementation, after the video data and the subtitle data are separated through the hardware decoding mode, the video data and the subtitle data also may be optimized respectively through software. With the processing mode of the combination of software and hardware, the processing effect and processing efficiency of the video data and the subtitle data may be greatly improved.

For example, optimizing the video data may comprise processing manners such as rendering image, enhancing resolution, and adjusting a frame rate for playing video; furthermore, optimizing the subtitle data may comprise processing manners such as saving subtitles, restoring text and converting format.

Preferably, after the separated video data and subtitle data are generated, the video data and the subtitle data may be sent to a display device (such as a displayer) for displaying in a corresponding way according to a user control instruction sent by a client side.

Corresponding to the above-mentioned method, the present embodiment also provides a device for extracting subtitles which is configured to realize the above-mentioned embodiments and preferred implementation, which has been described, thereby needing no further description. As used below, the term "component" can realize the combination of software and/or hardware with predetermined functions. Although the device described in the following embodiment is achieved preferably by software; however, hardware or the combination of software and hardware also can be possible and contemplated.

Fig. 2 is a structural block diagram of a device for extracting subtitles according to an embodiment of the present invention, as shown in Fig. 2, and the device comprises a separation component **22** and a sending component **24.** The above components are described below in detail.

The separation component 22 is configured to separate a video stream input into a mobile terminal into video data and subtitle data through a hardware decoding mode; and the sending component 24 is configured to send the video data and the subtitle data.

Through the above-mentioned components in the present embodiment, the separation component 22 separates the video stream input into the mobile terminal into the video data and the subtitle data through the hardware decoding mode, and then the sending component 24 sends the video data and the subtitle data, respectively. Compared to the manner of using a pure software algorithm based on digital image processing to realize the separation of video data and subtitle data in the relevant art, the hardware decoding mode used in the present embodiment has high efficiency and has no requirements to the image quality of the video. No matter the video has low image quality or high image quality, the separation of the video data and the subtitle data may be achieved. Furthermore, the hardware decoding mode has a small amount of operation, so that the load of the main processor in the process of the separation of the video and the subtitle is reduced, and the problem of relatively high resource occupation rate and low processing efficiency existed in a method for extracting subtitles in the relevant art is solved, thereby increasing the processing speed of a mobile terminal and improving the user experience.

Fig. 3 is a preferable structural block diagram of the separation component **22** according to an embodiment of the present invention, as shown in Fig. 3, the separation component 22 may comprise: a sending unit **222** configured to send the input video stream to a video processing chip, wherein the video processing chip is configured to separate the input video stream into the video data and the subtitle data through the hardware decoding mode; and an output unit **224** connected to the sending unit **222** and configured to output the video data and the subtitle data which are separated via a physical interface.

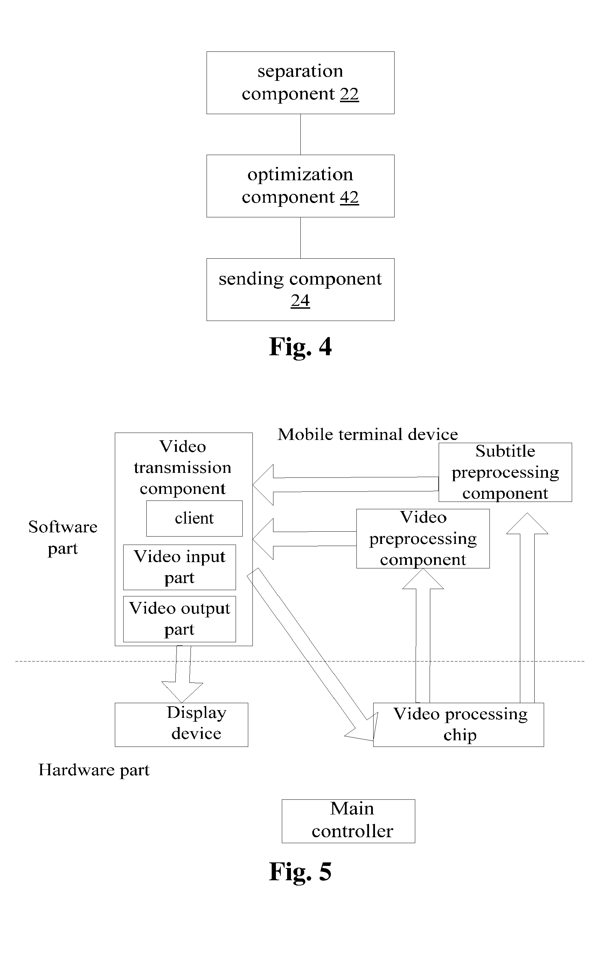

Fig. 4 is a preferable structural block diagram of a device for extracting subtitles according to an embodiment of the present invention, as shown in Fig. 4, the device may comprise: an optimization component **42** connected to the separation component 22 and the sending component 24 and configured to optimize the video data and the subtitle data respectively.

The invention is described with reference to preferred embodiments below, and the following preferred embodiments combine the above-mentioned embodiments and the preferred implementation thereof.

In the following preferred embodiments, a method for extracting video subtitles of a mobile terminal is provided, and the method completes the function of video subtitle extraction by adding software function components on the mobile terminal side and cooperating with the video processing chip in the mobile terminal.

In the following preferred embodiments, the application in the embedded software development of a mobile terminal is taken as an example, three software function components are realized in the mobile terminal in the solution, and furthermore, the inbuilt video processing chip of the mobile terminal is cooperated to achieve the function of extracting and using the video subtitle in real time, thereby greatly improving the user experience of a mobile terminal device and enriching functions of the mobile terminal device.

### Preferred embodiment I

For overcoming the too large amount of calculation and poor user experience which are brought by the fact that the separation of the video data and the subtitle data completely depends on the realization the pure software algorithm, the present preferred embodiment provides a method for extracting video subtitles in which a software function adding component is cooperating with a video processing chip in the mobile terminal, thus achieving a new solution for extracting subtitles of a video playing on a mobile terminal.

Three software components are added in the software part of a mobile terminal in the present solution: a video output component (realizing the function of the above-mentioned sending component **24),** a video preprocessing component (realizing a part of the function of the above-mentioned optimization component 42) and a subtitle preprocessing component (realizing a part of the function of the above-mentioned optimization component 42). By means of the cooperation of the above-mentioned three software components and the video processing chip in hardware of the mobile terminal, the function of extracting subtitles of a video playing on the mobile terminal may be achieved.

The functions and realizing manners of the three function components included in the software part in the present preferred embodiment are as follows:
1, A video preprocessing component of the mobile terminal: the component may preprocess a video output by the video processing chip, the video is an original video stream subjected to hard decoding of the video processing chip, and a sending video transmission interface of a video processor comprises but not limited to an SDIO interface, a USB interface, a dual port RAM, a shared memory, etc.
2, A subtitle preprocessing component of the mobile terminal: the component is a processing implementation component of video subtitles, this kind of process comprises but not limited to the functions of saving subtitles, restoring text, converting format, and sending and outputting subtitles.
3, A video preprocessing component of the mobile terminal: the component may comprise three parts: a video input part, a video output part and a client side.

The video input part may transmit a video of which subtitles are to be extracted to the video processing chip; the video output part may output the video subjected to preprocessing and the subtitles thereof to a display device on the mobile terminal; and the client side may be an application layer program present to the user, and the user may perform various instruction selections of subtitle processing on the client side. The client side comprises but not limited to the functions of playing a video, selecting a video to be processed, etc.

Considering the efficiency, the realization of the video transmission component basically uses video data flow transparent transmission to reduce the load of software to improve the efficiency. Whether to output subtitles and how to output the subtitles are determined according to the control instruction sent by the user.

The hardware part cooperated with the above-mentioned software part may comprise the following two components:
1, A video processing chip which receives the input video to be processed, is a core component for separating the video stream and the original code of the subtitles, and is connected to a central processing unit (CPU) of the mobile terminal in a bus way.
2, A display device which is configured to receive the video data stream sent by the video transmission component and is a final display device present to the user.

In the function realization defined by the present preferred embodiment, the work sequence and interactive process of the components comprise the following steps:
Step I, the video processing chip receives the video data stream sent by the video transmission component, and the video is in the form of mixing the subtitles and the video stream.
Step II, the video processing chip separates the original video stream into a video code stream and an original subtitle code stream through a hardware decoding mode. Then, the video processing chip sends the processed video code stream and original subtitle code stream to the video preprocessing component and the subtitle processing component via a certain physical interface.
Step III, the video preprocessing component optimizes the separated video code stream after receiving it. The optimizing process comprises but not limited to rending image, enhancing resolution or increasing/decreasing a frame rate for displaying the video. Finally, the processed video is sent to the video transmission component.
Step IV, the subtitle preprocessing component optimizes the separated video code stream after receiving the separated video code stream. The processes comprise but not limited to saving subtitles, restoring text, converting format and sending and outputting subtitles.
Step V, after receiving the video data processed by the video preprocessing component and the subtitles processed by the subtitle processing component, the video transmission component sends the video data and the subtitle data to the display device in a corresponding form according to a user command sent by the client side.

By means of the above-mentioned solutions, the method for extracting subtitles of the video playing on the mobile terminal in the present preferred embodiment has the following advantages which improve the user experience:
1, the cooperation of software and hardware is employed to extract the subtitles in the present invention, so that the limited arithmetic capability and the restrictions that the video subtitles are not able to be processed in real time and the subtitles of the high-definition video maynot be processed which are brought by pure software realization are avoided, thereby extending the application range of subtitle extraction.
2, the present preferred embodiment is realized in the manner of combining software and hardware, so that the computation load of the main processor of the terminal may be greatly reduced, the effective handling capacity of the mobile terminal is enhanced, and the user experience is greatly improved.

### Preferred embodiment II

Fig. 5 is cooperation schematic diagram of all the function components of a mobile terminal according to a second preferred embodiment of the present invention, as shown in Fig. 5, the present solution mainly comprise two parts: a software part and a hardware part. The software part may comprise a video transmission component, a video preprocessing component and a subtitle preprocessing component; and the hardware part may comprise a mobile terminal display device and a video processing chip.

The video data stream to be processed is sent to the video processing chip for processing through the video transmission component, the video processing chip performs hard encoding on the input video data to obtain a video code stream and an original subtitle code stream. The video code stream and the original subtitle code stream are sent to the video preprocessing component and the subtitle preprocessing component respectively via a physical interface. After performing a certain degree of optimization on the video data, the video preprocessing component sends the optimized video to the video transmission component; and after performing the processing such as restoring text and saving on the input original subtitle data, the subtitle preprocessing component sends the original subtitle data to the video transmission component. After receiving the optimized video data and subtitle data, the video transmission component sends the video data and subtitle data to the display device in a certain way according to the instruction sent by the client side.

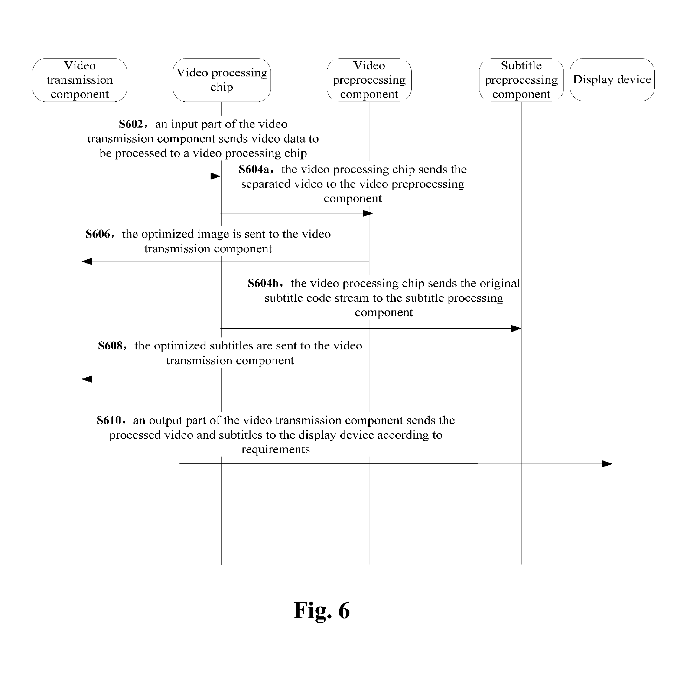

Fig. 6 is a flowchart of an operating mode for extracting subtitles of a video playing on a mobile terminal according to a second preferred embodiment of the present invention, as shown in Fig. 6, Fig. 6 describes a work procedure and a logical judgement procedure for extracting subtitles of the video playing on the mobile terminal according to the present preferred embodiment, the procedure comprises the following steps.
Step S602, a client side in the video transmission component sends video data to be processed to a video input part in the video transmission component. The video data comprise but not limited to video data sent by a camera, streaming media video data sent through a network, and video data locally stored in the mobile terminal. The video input part of the video transmission component sends the video data to be processed to the video processing chip via a physical interface, and these physical interfaces comprise but not limited to an SDIO interface, a USB interface, a dual port RAM, a shared memory, etc.
Step S604, after receiving the video data to be processed, the video processing chip separates the video data to be processed into video data and original subtitle code stream through a hardware decoding manner. Then, the separated video data and the original subtitle code stream are transmitted to the video preprocessing component (S604a) and the subtitle preprocessing component (S604b) respectively through a physical interface. These physical interfaces comprise but not limited to an SDIO interface, a USB interface, a dual port RAM, a shared memory, etc.
Step S606, after receiving the separated video data, the video preprocessing component optimizes the separated video data, and the optimizing process comprises but not limited to rending image, enhancing resolution or increasing/decreasing a frame rate for displaying the video. How to select an optimization measure specially is determined according to an instruction of the user. Finally, the optimized image is sent to the video transmission component.
Step S608, after receiving the original subtitle code stream, the subtitle preprocessing component optimizes the original subtitle code stream. The optimizing process comprises but not limited to saving subtitle, restoring text and converting format, and a processed result will be sent to the video transmission component.
Step S610, the video transmission component receives the video data processed by the video preprocessing component and the subtitle data processed by the subtitle preprocessing component, then sends the video data and subtitle data to the display device in a corresponding way according to a control instruction received by a client side in the video transmission component from a user.

Because of the above-mentioned advantages, while the present solution has a certain of novelty, it also has a high practical value, and the usability and stability of a product and the user experience are greatly improved.

In another embodiment, software is further provided, and the software is used for performing the technical solutions described in the above-mentioned embodiments and in the preferred implementation.

In another embodiment, a storage medium is further provided, the above-mentioned software is stored in the storage medium, and the storage medium comprises but not limited to optical disks, floppy disks, hard disks, removable storages, etc.

Obviously, those skilled in the art should know that each of the mentioned components or steps of the invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the invention is not restricted to any particular hardware and software combination.

The descriptions above are only the preferable embodiment of the invention, which are not used to restrict the invention, for those skilled in the art, the invention may have various changes and variations. Any amendments, equivalent substitutions, improvements, etc. within the principle of the invention are all included in the scope of the protection of the invention.

## Claims

1. A method for extracting subtitles, **characterized by** comprising:
separating a video stream input into a mobile terminal into video data and subtitle data through a hardware decoding mode; and
sending the video data and the subtitle data.

2. The method according to claim 1, **characterized in that** separating the video stream input into the mobile terminal into the video data and the subtitle data through the hardware decoding mode comprises:
sending the input video stream to a video processing chip, wherein the video processing chip is configured to separate the input video stream into the video data and the subtitle data through the hardware decoding mode and output the video data and the subtitle data which are separated via a physical interface.

3. The method according to claim 2, **characterized in that** the physical interface comprise at least one of the following: a Secure Digital Input/Output (SDIO) interface, a Universal Serial Bus (USB) interface, a dual port Random Access Memory (RAM) and a shared memory.

4. The method according to any one of claims 1 to 3, **characterized in that** before sending the video data and the subtitle data, the method further comprises:
optimizing the video data and the subtitle data respectively.

5. The method according to claim 4, **characterized in that** optimizing the video data comprises at least one of the following:
rendering image, enhancing resolution, and adjusting a frame rate for playing video.

6. The method according to claim 4, **characterized in that** optimizing the subtitle data comprises at least one of the following:
saving the subtitles, restoring text and converting format.

7. The method according to any one of claims 1 to 6, **characterized in that** after sending the video data and the subtitle data, the method further comprises:
displaying the video data and the subtitle data according to a control instruction of the user.

8. A device for extracting subtitles, **characterized by** comprising:
a separation component configured to separate a video stream input into a mobile terminal into video data and subtitle data through a hardware decoding mode; and
a sending component configured to send the video data and the subtitle data.

9. The device according to claim 8, **characterized in that** the separation component comprises:
a sending unit configured to send the input video stream to a video processing chip, wherein the video processing chip is configured to separate the input video stream into the video data and the subtitle data through the hardware decoding mode; and
an output unit configured to output the video data and the subtitle data which are separated via a physical interface.

10. The device according to claim 8 or 9, **characterized in that** the device also comprises:
an optimization component configured to optimize the video data and the subtitle data respectively.
